# EUROPÄISCHE PATENTANMELDUNG

(11) **EP 4 636 513 A1**
(43) Veröffentlichungstag der Anmeldung: **22.10.2025**
(21) Anmeldenummer: 24171195.1
(22) Anmeldetag: 19.04.2024
(51) Int. Cl.: G05B 19/042, G05B 19/05

(54) **INDUSTRIESTEUERUNG MIT EINEM GEHÄUSE UND EINER RECHENEINHEIT**

(71) Anmelder: Siemens Aktiengesellschaft, 80333 München (DE)
(72) Erfinder: Cox, Ned, Johnson City, 37601 (US); Gustavson, Jason, Unicoi, 37692 (US); Karklins, Gregory J., Johnson City, 37601 (US)
(74) Vertreter: Siemens Patent Attorneys

(57) **Zusammenfassung**

Um auf eine Industriesteuerung (100) mit einem Gehäuse (99), in welchem eine erste Leiterplatte (LP1) mit einer Recheneinheit (1) angeordnet ist, weiterhin aufweisend ein Betriebssystem (2) und ein Anwenderprogramm (AW), leichter zugreifen zu können, wird unterhalb einer Vorderseite (Vo) des Gehäuses (99) eine zweite Leiterplatte (LP2) angeordnet, die zweite Leiterplatte (LP2) aufweisend eine als eine NFC-Antenne ausgestaltete Leiterschleife (LS). Über ein NFC-Bauteil (D5) kann das Betriebssystem (2) Daten nach außen geben.

## Beschreibung

Die Erfindung betrifft eine Industriesteuerung mit einem Gehäuse, in welchem eine erste Leiterplatte mit einer Recheneinheit angeordnet ist, weiterhin aufweisend ein Betriebssystem und ein Anwenderprogramm, welches zum Steuern eines industriellen Prozesses in der Recheneinheit zum Ablauf gebracht wird, wobei die Recheneinheit einen Datenspeicher aufweist, und das Betriebssystem ausgestaltet ist das Anwenderprogramm zyklisch abzuarbeiten.

Im Sinne der Erfindung wird unter Industriesteuerung vorzugsweise eine speicherprogrammierbare Steuerung (SPS) verstanden, dieses ist ein Automatisierungsgerät, das zur Steuerung oder Regelung einer Maschine oder einer Anlage in einem industriellen Umfeld eingesetzt wird. Bei einer zyklusorientierten SPS wird durch ein vom Hersteller fest eingespeichertes Betriebssystem dieser Zyklus kontrolliert. Das Steuerungsprogramm kann bedingt durch seine Programmbausteine Verzweigungen und bedingte Aufrufe beinhalten, welche unterschiedliche Laufzeiten zur Folge hat.

Die EP 2 477 085 B1 beschreibt bereits eine derartige Industriesteuerung. Von Nachteil bei den bekannten Industriesteuerungen ist es, dass ein PC an die Industriesteuerung angeschlossen werden muss, selbst wenn man nur Informationen zu sammeln will oder eine einfache Änderung an der SPS vorzunehmen will. Eine Fachperson muss sich derzeit über den PC mit der SPS-Programmiersoftware oder dem Webbrowser verbinden, um mit der SPS interagieren zu können.

Es ist eine Aufgabe der vorliegenden Erfindung eine Industriesteuerung bereitzustellen, welche es einer Fachperson erleichtert Informationen über die Industriesteuerung zu erhalten.

Die Aufgabe wird dadurch gelöst, dass ein NFC-Bauteil vorhanden ist, wobei unterhalb einer Vorderseite des Gehäuses eine zweite Leiterplatte angeordnet ist, die zweite Leiterplatte weist eine als eine NFC-Antenne ausgestaltete Leiterschleife mit einem ersten Endpunkt und zweiten Endpunkt auf, das NFC-Bauteil weist einen ersten Antenneneingang, einen zweiten Antenneneingang, eine Datenschnittstelle und einen Signalisierungsausgang auf, das NFC-Bauteil ist ausgestaltet über den Signalisierungsausgang ein Signal auszugeben, wenn über die NFC-Antenne eine Kommunikationsanfrage erkannt wird, der erste Endpunkt ist an den ersten Antenneneingang und der zweite Endpunkt ist an den zweiten Antenneneingang angeschlossen, weiterhin weist die Recheneinheit einen Signalisierungseingang und eine Gegenschnittstelle auf, der Signalisierungseingang ist mit dem Signalisierungsausgang verbunden und die Gegenschnittstelle ist mit der Datenschnittstelle verbunden, das Betriebssystem ist ausgestaltet ein Signal am Signalisierungseingang zu erkennen, weiterhin ist es ausgestaltet eine Konfigurations-Datei, welche im Datenspeicher abgelegt ist abzufragen, und abhängig vom Abfrageergebnis eine Datenkommunikation auf der Gegenschnittstelle zuzulassen.

Mit einem NFC-Bauteil und der passenden Antenne, welche in die Industriesteuerung integriert sind, kann die Fachperson problemlos Informationen von der Industriesteuerung abrufen. Das funktioniert bei ausgeschaltetem und eingeschaltetem Strom. Wenn eine Fachperson beispielsweise ein Smartphone mit einer passenden App nahe (-1-2 cm) an die Vorderseite der Industriesteuerung bringt, kommuniziert die Industriesteuerung mit dem Telefon.

Eine weitere Ausgestaltung der Industriesteuerung sieht vor, dass das Betriebssystem weiterhin ausgestaltet ist aus der Konfigurations-Datei einen Dateneintrag auszulesen, in welchem Schreib-Lese-Rechte hinterlegt sind, das Betriebssystem ist weiterhin ausgestaltet die Schreib-Leserechte zu prüfen und für den Fall, das nur ein Leserecht vorliegt, über die Gegenschnittstelle keine Schreibaufträge in den Datenspeicher und/oder in die Konfigurations-Datei und/oder in ein Prozessabbild und/oder in einen Variablenhaushalt des Anwenderprogramms zuzulassen.

Eine weitere Ausgestaltung der Industriesteuerung sieht vor, dass das Betriebssystem weiterhin ausgestaltet ist bei einer Datenkommunikation eine Seriennummer der Industriesteuerung auszulesen und einem NFC-Schreib-Lesegerät zu übergeben.

Sobald ein erster Lesevorgang abgeschlossen ist, ist danach auch ein Schreibvorgang möglich, aber nicht erforderlich, dies liegt im Ermessen der Fachperson. Aber das erste Lesen sollte vorzugsweise durchgeführt werden, um die Seriennummer zu erhalten, damit ein Schreiben sicher wird.

Eine weitere Ausgestaltung der Industriesteuerung sieht vor, dass das Betriebssystem weiterhin ausgestaltet ist bei einer Datenkommunikation mit einem Schreibauftrag in den Datenspeicher eine von dem NFC-Schreib-Lesegerät mitgelieferte und dem Schreibauftrag zugeordnete Identifikations-Seriennummer zwischen zu speichern, die eigene Seriennummer der Industriesteuerung auszulesen und einen Vergleich der Seriennummern durchzuführen und für den Fall, dass die Seriennummern identisch sind, den Schreibauftrag durchzuführen.

Die Seriennummer ist für jede hergestellte Industriesteuerung einzigartig und wird bei nachfolgenden NFC-Schreibvorgängen verwendet, um sicherzustellen, dass das NFC-Schreib-Lesegerät, welches den Schreibvorgang ausführen möchte, auch mit der Industriesteuerung verbunden ist, die auf dem Bildschirm des NFC-Schreib-Lesegerät der mobilen Anwendungen angezeigt wird. Demnach gibt es einen 2-stufigen Prozess, um Daten mit NFC zu schreiben. Es muss ein Lesevorgang durchgeführt werden, um die CPU zu identifizieren, und dann kann ein zweiter vom Benutzer initiierter NFC-Schreibvorgang durchgeführt werden. Die Seriennummer wird beim NFC-Schreibvorgang verwendet, um die Industriesteuerung zu verifizieren.

Eine weitere Ausgestaltung der Industriesteuerung sieht vor, dass das Betriebssystem ausgestaltet ist Diagnosedaten zusammenzustellen und zur Abfrage an der Gegenschnittstelle bereitzustellen.

Einer Fachperson können so zum Beispiel Zykluszeit, Speicherausnutzung, Alarme, Diagnosepuffer auf ihr Smartphone angezeigt werden. Ist das NFC-Schreib-Lesegerät ein Smartphone, so ist auf dem Smartphone eine passende App installiert. Diese App weist dann einen Hauptbildschirm mit Buttons auf, damit diese aktiv sind, muss mindestens ein Industriesteuerung erfolgreich gescannt worden sein und als ausgewähltes Gerät zugewiesen sein. Wenn der Button Diagnose auf dem Hauptbildschirm gedrückt wird, wird der Bildschirm "Diagnose" angezeigt. Auf dem Bildschirm Diagnose kann folgendes ausgeführt werden.
- Anzeige von Diagnosen auf der Industriesteuerung und den zugehörigen Modulen.
- Anzeigen von Informationen über die Gerätekonfiguration im Vergleich zur tatsächlichen Hardware an der Industriesteuerung
- Informationen zu den Eigenschaften einer Speicherkarte anzeigen
- Anzeigen der Zykluszeiten
- Belegten vs. freien Speicher anzeigen
- Anzeigen des Diagnosepuffers.

Eine weitere Ausgestaltung der Industriesteuerung sieht vor, dass das Betriebssystem ausgestaltet ist Konfigurationsdaten von weiteren über einen Rückwandbus an der Industriesteuerung angeschlossenen Baugruppen zusammenzustellen und zur Abfrage an der Gegenschnittstelle bereitzustellen.

So könnte auf dem Smartphone eine Hardwarekonfiguration der Baugruppen, Module, Ein-Ausgabebaugruppen, Kommunikationsbaugruppen, usw. dargestellt werden.

Eine weitere Ausgestaltung der Industriesteuerung sieht vor, dass das Betriebssystem ausgestaltet ist in der Konfigurations-Datei nach einer Beobachtungsliste von Variablen zu suchen, die Variablen der Beobachtungsliste mit den aktuellen Werten des Prozessabbildes zu füllen, und zur Abfrage an der Gegenschnittstelle bereitzustellen.

Eine weitere Ausgestaltung der Industriesteuerung sieht vor, dass das Betriebssystem ausgestaltet ist in der Konfigurations-Datei nach einer Steuerungsliste von Variablen zu suchen, die Variablen der Steuerungsliste mit den aktuellen Werten des Prozessabbildes zu füllen, und zur Abfrage an der Gegenschnittstelle bereitzustellen, weiterhin ausgestaltet an der Gegenschnittstelle die Steuerungsliste mit veränderten Werten entgegenzunehmen und in das aktuelle Prozessabbild zu schreiben.

Wenn auf der App der Button oder die Schaltfläche "Watch/Force Tables", also Beobachten/Steuern auf dem Hauptbildschirm gedrückt wird, wird der Bildschirm "Watch / Force Tables" angezeigt. Watch- und Force-Tabellen werden optional zuvor in einem Engineering System für die Industriesteuerung konfiguriert. Wenn keine der beiden Tabellen im Engineering System konfiguriert und auf die Industriesteuerung heruntergeladen wird, muss die mobile NFC-Anwendung anzeigen, dass keine Tabellen vorhanden sind.

Eine weitere Ausgestaltung der Industriesteuerung sieht vor, dass das Betriebssystem ausgestaltet ist, bei einem erstmaligen einschalten der Industriesteuerung das NFC-Bauteil zu konfigurieren, dazu ist das Betriebssystem ausgestaltet einen EEPROM-Speicher des NFC-Bauteils zu löschen, eine CC-Datei anzulegen, den EEPROM-Speicher ab Ende der CC-Datei NDEF-konform zu formatieren.

Demnach muss das Betriebssystem, das heißt die Firmware der Industriesteuerung folgende Schritte ausführen:
1) Löschen des gesamten EEPROM-Speichers.
2) Eine CC-Datei mit folgenden Daten: E2 40 00 01 00 00 03 FF generieren.
3) Den verbleibenden Speicher nach der CC-Datei so formatieren, dass er NDEF-konform ist.

Dies kann erreicht werden, indem eine ordnungsgemäß formatierte NDEF-Nachricht als Standard auf dem EEPROM platziert wird.

Die CC-Datei umfasst 8-Byte und ist wie folgt zu speichern:
"E2 43 00 01 00 00 3F FE".

Damit die Kommunikation zwischen dem Smartphone und der Industriesteuerung möglichst störungsfrei funktioniert ist eine Auslegung der Antenne entscheidend. Sehr gute Ergebnisse wurden mit einer Antenne erzielt, welche eine Länge von ca. 53,5 mm, eine Breite von ca. 35,7 mm und eine Windungsanzahl von sechs aufweist, zusätzlich sind die Windungen ca. 0,23 mm voneinander beabstandet und weisen eine Breite von ca. 0,23 mm auf, eine Dicke der Windung beträgt 35µm.

Die Antenne ist eine Schaltungsleiterbahn, die eine bestimmte Leiterbahnbreite, einen bestimmten Leiterbahnabstand und eine bestimmte Anzahl von Windungen hat, um die Leiterschleife auf die Trägerfrequenz von 13,576 MHz abzustimmen. Die Antenne weist demnach eine Induktivität von 4,43 µH bei 13.56 MHz auf, eine Dicke der Leiterplatte ist ca. 1,6 mm und ε r ist gleich 4,6.

Die Industriesteuerung bzw. die Antenne wird weiter verbessert, wenn zwischen dem ersten Endpunkt und dem zweiten Endpunkt schaltungstechnisch ein ESD-Entstör-Bauteil angeordnet ist.

Bei der Industriesteuerung ist vorteilhafterweise die Recheneinheit als ein anwendungsspezifischer integrierter Schaltkreis mit Prozessoren, Schnittstellen, Speicher, Speichermanagement, Ablaufumgebung für das Betriebssystem und Profinet-Schnittstellen ausgestaltet.

Weiter Vorteile sind folgende:
a. Handy-Zugriff auf SPS-Identifikationsdaten.
b. Zugriff auf Diagnosedaten per Mobiltelefon.
c. Zugriff auf Mobiltelefone zum Lesen von SPS-Datenvariablen, die den Fertigungsprozess steuern.
d. Zugriff auf Datenvariablen, die den Herstellungsprozess steuern.
e. Zugriff per Mobiltelefon, um den Betriebsmodus der CPU von RUN auf STOP oder STOP auf RUN zu ändern.
f. Mit dem Mobiltelefon kann der Kunde nun einfach mit einem Fingerschnippen die SPS-Daten durchsuchen, um durch den einen großen Datensatz scrollen. Eine deutliche Verbesserung der Benutzerfreundlichkeit gegenüber allen Frontpanel-Displays in bestehenden SPS ist gegeben.
g. Zugriff auf Mobiltelefone und historische Aufzeichnung und Speicherung von SPS-Daten für 100 NFC-gescannte SPSen. Diese Daten können dann später im Büro abgerufen und bei Bedarf analysiert werden.
h. Zugriff per Mobiltelefone, um die IP-Suite zu schreiben, um Computerverbindungsprobleme über Ethernet zu beheben.
i. Der Zugriff per Mobiltelefone kann konfiguriert werden: blockiert, schreibgeschützt, Lese-/Schreibzugriff oder Lese-/Schreibzugriff, jedoch mit einem Kennwort.

Eine Fachperson kann nun ganz einfach sein Mobiltelefon mit einer entsprechenden App verwenden und einfach auf die Vorderseite der SPS "tippen". Wenn die Fachperson ihr Mobiltelefon in die Nähe (-1-2 cm) der Vorderseite der SPS bringt, kommuniziert die SPS mit dem Telefon.

Datenübertragungen (Scans) werden durchgeführt, wenn die Anwendung "bereit zum Scannen" ist, indem das Telefon innerhalb von 10 cm an den NFC-Tag an der Vorderseite der CPU gehalten wird. Zur Sicherheit wird ein Doppeltippen ausgeführt beim ersten Tippen wird die Seriennummer gelesen und bei einem zweiten Tippen wird die Seriennummer verglichen und an jetzt können auch Schreibaufträge angesetzt werden.

Nun gibt es auch eine Möglichkeit, eine Industriesteuerung im Lager durch das Packmaterial zu erkennen.

Die Zeichnung zeigt ein Ausführungsbeispiel der Erfindung, dabei zeigt
- FIG 1: eine Industriesteuerung in einer perspektivischen und aufgeschnittenen Darstellung,
- FIG 2: die Leiterplatten aus der Industriesteuerung,
- FIG 3: ein schematisches Blockschaltbild der Funktion von der ersten Leiterplatte in Verbindung mit der zweiten Leiterplatte,
- FIG 4: ein Verschaltungsbeispiel einer Antenne mit einem NFC-Bauteil und
- FIG 5: die Belegung eines EEPROM-Speichers des NFC-Bauteils.

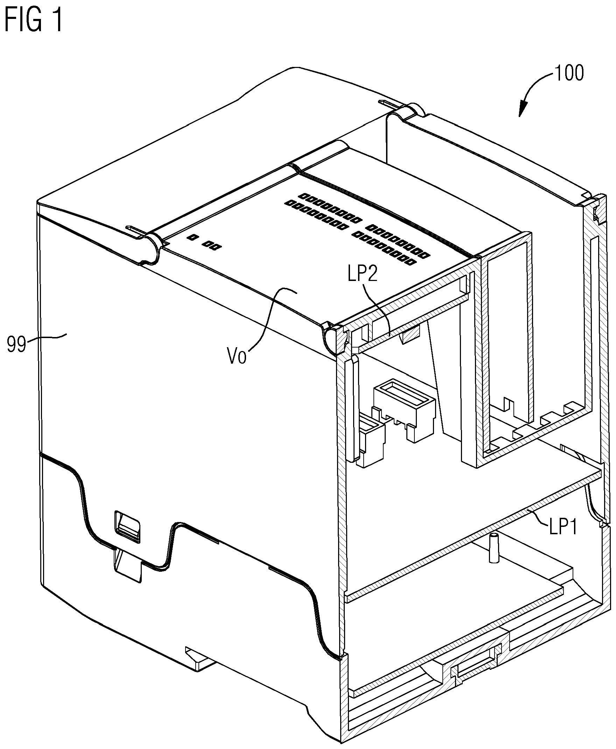

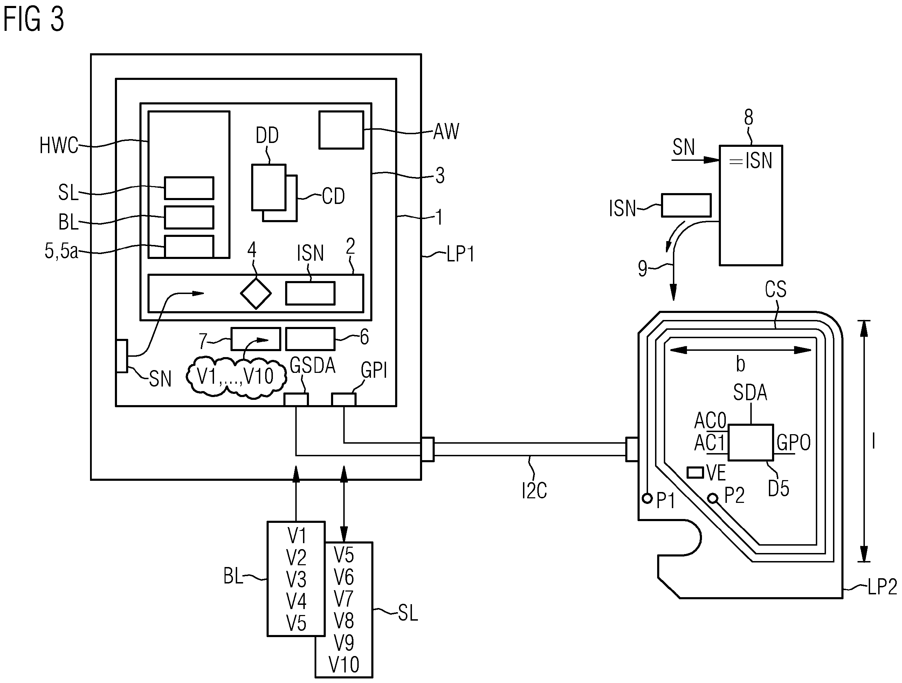

Gemäß FIG 1 ist eine Industriesteuerung 100 mit einem Gehäuse 99 dargestellt. In dem Gehäuse 99 ist eine erste Leiterplatte LP1 mit einer Recheneinheit 1 angeordnet. Unterhalb einer Vorderseite Vo des Gehäuses 99 ist eine zweite Leiterplatte LP2 angeordnet. Die zweite Leiterplatte LP2 weist eine als NFC-Antenne ausgestaltete Leiterschleife LS mit einem ersten Endpunkt P1 und einem zweiten Endpunkt P2 auf (siehe hierzu FIG 3).

Die Recheneinheit 1 (siehe FIG 3) weist in einem Datenspeicher 3 ein Betriebssystem 2 und ein Anwenderprogramm AWauf. Die Recheneinheit 1 ist speziell im Umfeld von Speicherprogrammierbaren Steuerungen dazu ausgestaltet, das Anwenderprogramm AW zyklisch zum Ablauf zu bringen bzw. abzuarbeiten.

Damit eine Fachperson nun einfach an Diagnosedaten, Variablen, Steuerlisten oder Beobachtungslisten der Industriesteuerung 100 herankommen kann, ist die Industriesteuerung 100 derart ausgestaltet, dass auf der zweiten Leiterplatte LP2 ein NFC-Bauteil D5 vorhanden ist, dazu ist unterhalb der Vorderseite Vo des Gehäuses 99 die zweite Leiterplatte LP2 angeordnet. Die zweite Leiterplatte LP2 weist eine als NFC-Antenne ausgestaltete Leiterschleife LS mit einem ersten Endpunkt P1 und einem zweiten Endpunkt P2 auf.

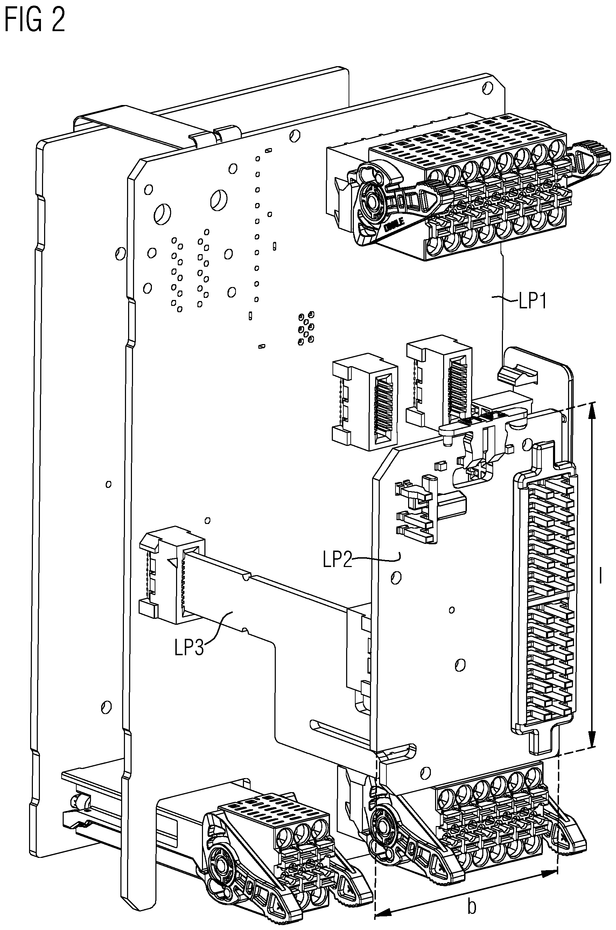

Gemäß der FIG 2 ist die Anordnung der ersten Leiterplatte LP1 und LP2 innerhalb des Gehäuses 99 dargestellt. Auf der ersten Leiterplatte LP1 befindet sich die Recheneinheit 1, auf der zweiten Leiterplatte LP2 befindet sich das NFC-Bauteil D5 und die als eine NFC-Antenne ausgestaltete Leiterschleife LS. Damit die erste Leiterplatte LP1 mit der zweiten Leiterplatte LP2 kommunizieren kann, ist zwischen der ersten Leiterplatte LP1 und der zweiten Leiterplatte LP2 über Steckverbinder eine dritte Leiterplatte LP3 mit entsprechenden Signalleitungen angeordnet.

Die FIG 3 zeigt schematisch den Aufbau der Industriesteuerung 100 mit einem NFC-Empfangsteil auf der zweiten Leiterplatte LP2. Auf der zweiten Leiterplatte LP2 ist das NFC-Bauteil D5 angeordnet, dieses weist einen ersten Antenneneingang AC0, einen zweiten Antenneneingang AC1, eine Datenschnittstelle SDA und einen Signalisierungsausgang GPO auf. Das NFC-Bauteil D5 ist ausgestaltet, über den Signalisierungsausgang GPO ein Signal auszugeben, wenn über die NFC-Antenne eine Kommunikationsanfrage erkannt wird. Die Recheneinheit 1 weist einen Signalisierungseingang GPI und eine Gegenschnittstelle GSDA auf. Der Signalisierungseingang GPI ist mit dem Signalisierungsausgang GPO der zweiten Leiterplatte LP2 verbunden. Die Gegenschnittstelle GSDA der Recheneinheit 1 ist mit der Datenschnittstelle SDA mit dem NFC-Bauteil D5 verbunden. Das Betriebssystem 2 ist ausgestaltet, ein Signal am Signalisierungseingang GPI, quasi als Interrupt zu erkennen und ist damit weiterhin ausgestaltet, eine Konfigurations-Datei HWC, welche im Datenspeicher 3 abgelegt ist, abzufragen. Bei dieser Abfrage wird entschieden, ob die Industriesteuerung 100 mit der Recheneinheit 1 dafür konfiguriert ist, eine Datenkommunikation auf der Gegenschnittstelle GSDA zuzulassen. Dazu ist das Betriebssystem 2 ausgestaltet, ein Abfrageergebnis 4 bereitzustellen.

Das Betriebssystem 2 ist weiterhin ausgestaltet, aus der Konfigurations-Datei HWC einen Dateneintrag auszulesen, in welchem Schreib-Lese-Rechte 5,5a hinterlegt sind.

Das Betriebssystem 2 ist weiterhin ausgestaltet, die Schreib-Lese-Rechte 5 zu prüfen, und für den Fall, dass nur ein Lese-Recht 5a vorliegt, über die Gegenschnittstelle GSDA keine Schreib-Aufträge in den Datenspeicher 3 und/oder in die Konfigurations-Datei HWC und/oder in einem Prozessabbild 6 und/oder in einen Variablenhaushalt 7 des Anwenderprogramms AW zuzulassen.

Weiterhin ist das Betriebssystem 2 ausgestaltet, bei einer Datenkommunikation eine Seriennummer SN der Industriesteuerung 100 auszulesen und einen NFC-Schreib-Lese-Gerät 8 zu übergeben.

Weiterhin ist das Betriebssystem 2 ausgestaltet, über einer Datenkommunikation mit einem Schreib-Auftrag 9 in den Datenspeicher 3 eine von dem NFC-Schreib-Lese-Gerät 8 mitgelieferte und dem Schreib-Auftrag 9 zugeordnete Identifikations-Seriennummer ISN zwischenzuspeichern.

Damit sichergestellt ist, dass wenn ein Schreib-Auftrag 9 von einem NFC-Schreib-Lese-Gerät 8 auf die Industriesteuerung 100 ausgeübt wird, auch diese ausgewählte Industriesteuerung 100 gemeint ist, ist das Betriebssystem 2 weiterhin ausgestaltet, bei einem Schreib-Auftrag 9 in den Datenspeicher 3 eine von dem NFC-Schreib-Lese-Gerät 8 mitgelieferte Identifikations-Seriennummer ISN zwischenzuspeichern und mit der eigenen Seriennummer SN zu vergleichen.

Für den Fall, dass die Seriennummern identisch sind, kann der Schreibauftrag durchgeführt werden.

Die Seriennummer SN ist für jede hergestellte Industriesteuerung 100 einzigartig und wird bei nachfolgenden NFC-Schreibvorgängen 9 verwendet, um sicherzustellen, dass das NFC-Schreib-Lesegerät 8, welches den Schreibvorgang ausführen möchte auch mit der Industriesteuerung 100 verbunden ist, die auf dem Bildschirm des NFC-Schreib-Lesegerät der mobilen Anwendungen angezeigt wird. Demnach gibt es einen 2-stufigen Prozess, um Daten mit NFC zu schreiben. Es muss ein Lesevorgang durchgeführt werden, um die Industriesteuerung 100 zu identifizieren, und dann kann ein zweiter vom Benutzer initiierter NFC-Schreibvorgang durchgeführt werden. Die Seriennummer SN wird beim NFC-Schreibvorgang verwendet, um die Industriesteuerung zu verifizieren.

Das Betriebssystem 2 ist auch dazu ausgestaltet, Diagnosedaten DD zusammenzustellen und zur Abfrage an der Gegenschnittstellte GSDA bereitzustellen. Auch ist das Betriebssystem 2 dazu ausgestaltet, Konfigurationsdaten CD an weiteren über einen Rückwandbus an der Automatisierungssteuerung 100 angeschlossenen Baugruppen zusammenzustellen und zur Abfrage an der Gegenschnittstelle GSDA bereitzustellen. Auch können mittels des Betriebssystems 2 in der Konfigurations-Datei HWC nach einer Beobachtungsliste BL von Variablen V1,...,V10 gesucht werden. Die Variablen V1,...,V10 der Beobachtungsliste BL werden dann mit aktuellen Werten des Prozessabbildes 6 gefüllt und zur Abfrage an der Gegenschnittstelle GSDA bereitgestellt.

Um auch Variablen V1,...,V10 in dem Anwenderprogramm AW steuern zu können, ist das Betriebssystem 2 dazu ausgestaltet, in der Konfigurations-Datei HWC nach einer Steuerungsliste SL von Variablen V1,...,V10 zu suchen. Die Variablen V1,...,V10 der Steuerungsliste SL werden ebenfalls mit aktuellen Werten des Prozessabbildes 6 gefüllt und zur Abfrage an der Gegenschnittstelle GSDA bereitgestellt. Um auch wirklich Variablen V1,...,V10 zu steuern, ist das Betriebssystem 2 weiterhin dazu ausgestaltet an der Gegenschnittstelle GSDA die Steuerungsliste SL mit veränderten Werten entgegenzunehmen und in das Prozessabbild 6 zu schreiben.

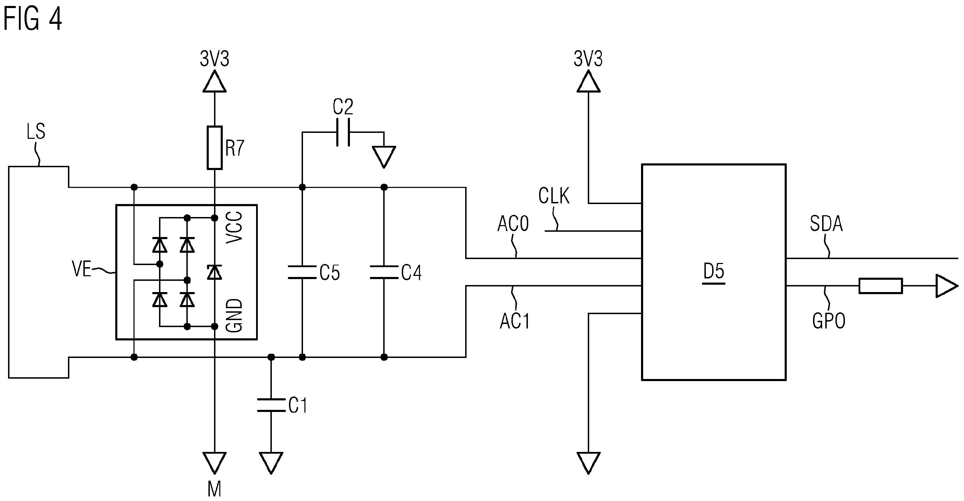

Gemäß FIG 4 ist ein Schaltplan dargestellt, wie die Leiterschleife LS mit dem NFC-Bauteil D5 verbunden ist. Die eigentliche Leiterschleife LS, also die NFC-Antenne ist an einen ersten Antenneneingang AC0 und an einem zweiten Antenneneingang AC1 angeschlossen. Zwischen dem ersten Endpunkt P1 und dem zweiten Endpunkt P2 ist ein ESD-Entstör-Bauteil V1 angeordnet. Dies dient der Eliminierung von elektrostatischen Ladungen, welche auf die Leiterschleife LS wirken können. Das ESD-Entstör-Bauteil V1 ist über einen VCC-Anschluss an einer Versorgungsspannung von 3,3 Volt über einen Widerstand R7 angeschlossen. Ein GND-Anschluss des ESD-Entstör-Bauteils V1 ist an Masse M angeschlossen. Der Signalweg von der Leiterschleife LS an die eigentlichen Antenneneingänge AC0,AC1 erstreckt sich über die mit FIG2 erwähnte dritte Leiterplatte LP3. Um auch hier Störungen abzufangen, sind Kondensatoren C2,C4,C5 und C1 eingebaut. Das NFC-Bauteil D5 liegt ebenfalls an einer 3,3 Volt Versorgungsspannung. Es wird mit einem Clock-Eingang CLK versorgt und liegt ebenfalls an Masse M. Das NFC-Bauteil D5 hat als Ausgabe die Datenschnittstelle SDA und den Signalisierungsausgang GPO.

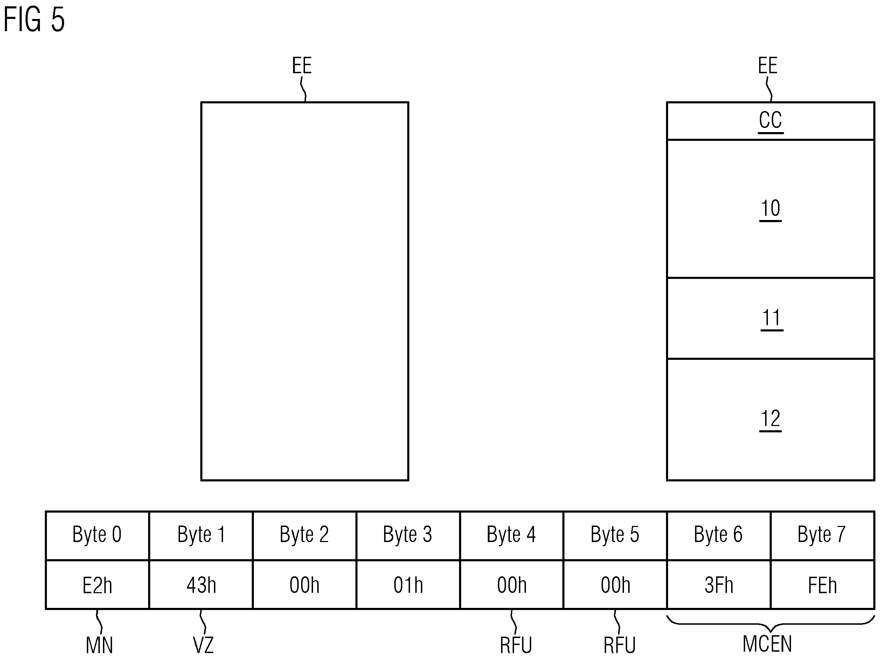

Mit der FIG 5 wird gezeigt, wie ein EEPROM-Speicher EE des NFC-Bauteils D5 durch das Betriebssystem 2 beim erstmaligen Einschalten konfiguriert wird. In dem zuvor leeren EEPROM-Speicher EE links abgebildet, wird in der rechen Abbildung eine CC-Datei cc angelegt, ein erster Speicherbereich 10, ein zweiter Speicherbereich 11 und ein dritter Speicherbereich 12 angelegt. Der EEPROM-Speicher EE wird ab Ende der CC-Datei cc in die EF-Komfort formatiert. Die CC-Datei cc ist wie folgt aufgebaut. Sie umfasst acht Bytes. Byte 0 bis Byte 7. Im Byte 0 ist eine magische Zahl abgespeichert für einen später genutzten Adressmodus. Byte 0 beherbergt eine Versions- und Zugriffsnummer. Byte 2 ist auf 00h gesetzt. Byte 3 beherbergt zusätzliche Featureinformationen. Byte 4 und Byte 5 sind für zukünftige Merkmale reserviert. RFU reservat vor Future. Byte 6 und Byte 7 beschreiben die Länge des NDEF-Gebietes des EEPROMS.

Die magische Zahl steht für den 2-Byte-Adressmodus Die Hauptversion ist 1 und die Nebenversion ist 0. Wenn die Zugriffssteuerung RF-NDEF schreibgeschützt ist.

Byte 3 wird anhand der auf dem NFC-Bauteil selbst verfügbaren Funktionen bestimmt, wobei 00h für fully feature steht.

RFU ist für die zukünftige Verwendung reserviert, d. h. 00h.

MLEN muss so eingestellt werden, dass es 8176 Bytes des NDEF-Gebiets repräsentiert. 8 Byte sind für die CC-Datei cc und 8 Byte für die Industriesteuerung 100 reserviert, was bedeutet, dass sie außerhalb des Bereichs von NDEF liegt.

Byte 1 ist schreibgeschützt, dies weist NFC-Anwendungen an, keine NDEF-Nachricht zu schreiben, scheint aber das Schreiben selbst nicht zu steuern.

Beispielsweise müssen "WriteSingleBlock" und "WriteMultipleBlock" ebenfalls blockiert werden, aber mit diesem Bytesatz als schreibgeschützt arbeiten.

Die Firmware bzw. das Betriebssystem muss das NFC-Bauteil D5 so konfigurieren, dass alle HF-Schreibvorgänge auf das EEPROM blockiert werden.

Der erste Speicherbereich 10 ist für NDEF NFC Data Exchange Format formatiert, dabei entstehen TLV-Blocks. TLV steht für Type, Length und Value, der zweite Speicherbereich 11 ist noch frei und der dritte Speicherbereich 12 wird z.Z. nicht genutzt.

## Patentansprüche

1. Industriesteuerung (100) mit einem Gehäuse (99), in welchem eine erste Leiterplatte (LP1) mit einer Recheneinheit (1) angeordnet ist, weiterhin aufweisend ein Betriebssystem (2) und ein Anwenderprogramm (AW), welches zum Steuern eines industriellen Prozesses in der Recheneinheit (1) zum Ablauf gebracht wird, wobei die Recheneinheit (1) einen Datenspeicher (3) aufweist und das Betriebssystem (2) ausgestaltet ist das Anwenderprogramm (AW) zyklisch abzuarbeiten,
**dadurch gekennzeichnet,**
**dass** ein NFC-Bauteil (D5) vorhanden ist, wobei unterhalb einer Vorderseite (Vo) des Gehäuses (99) eine zweite Leiterplatte (LP2) angeordnet ist, die zweite Leiterplatte (LP2) weist eine als eine NFC-Antenne ausgestaltete Leiterschleife (LS) mit einem ersten Endpunkt (P1) und zweiten Endpunkt (P2) auf,
das NFC-Bauteil (D5) weist
einen ersten Antenneneingang (AC0),
einen zweiten Antenneneingang (AC1),
eine Datenschnittstelle (SDA) und einen Signalisierungsausgang (GPO) auf, das NFC-Bauteil () ist ausgestaltet über den Signalisierungsausgang (GPO) ein Signal auszugeben, wenn über die NFC-Antenne eine Kommunikationsanfrage erkannt wird,
der erste Endpunkt (P1) ist an den ersten Antenneneingang (AC0) und der zweite Endpunkt (P2) ist an den zweiten Antenneneingang (AC1) angeschlossen, weiterhin weist die Recheneinheit (1) einen Signalisierungseingang (GPI) und eine Gegenschnittstelle (GSDA) auf, der Signalisierungseingang (GPI) ist mit dem Signalisierungsausgang (GPO) verbunden und die Gegenschnittstelle (GSDA) ist mit der Datenschnittstelle (SDA) verbunden, das Betriebssystem (2) ist ausgestaltet
• ein Signal am Signalisierungseingang (GPI) zu erkennen, weiterhin ist es ausgestaltet
• eine Konfigurations-Datei (HWC), welche im Datenspeicher (3) abgelegt ist abzufragen, und abhängig vom Abfrageergebnis (4) eine Datenkommunikation auf der Gegenschnittstelle (GSDA) zuzulassen.

2. Industriesteuerung (100) nach Anspruch 1, wobei das Betriebssystem (2) weiterhin ausgestaltet ist aus der Konfigurations-Datei (HWC) einen Dateneintrag auszulesen, in welchem Schreib-Lese-Rechte (5) hinterlegt sind,
das Betriebssystem (2) ist weiterhin ausgestaltet die Schreib-Leserechte (5) zu prüfen und für den Fall, das nur ein Lese-Recht (5a) vorliegt, über die Gegenschnittstelle (GSDA) keine Schreibaufträge in den Datenspeicher (3) und/oder in die Konfigurations-Datei (HWC) und/oder in ein Prozessabbild (6) und/oder in einen Variablenhaushalt (7) des Anwenderprogramms (AW) zuzulassen.

3. Industriesteuerung (100) nach Anspruch 1 oder 2, wobei das Betriebssystem (2) weiterhin ausgestaltet bei einer Datenkommunikation eine Seriennummer (SN) der Industriesteuerung (100) auszulesen und einem NFC-Schreib-Lesegerät (8) zu übergeben.

4. Industriesteuerung (100) nach Anspruch 3, wobei das Betriebssystem (2) weiterhin ausgestaltet bei einer Datenkommunikation mit einem Schreibauftrag in den Datenspeicher (3) eine von dem NFC-Schreib-Lesegerät (8) mitgelieferte und dem Schreibauftrag (9) zugeordnete Identifikations-Seriennummer (ISN) zwischen zu speichern, die eigene Seriennummer (SN) der Industriesteuerung (100) auszulesen und einen Vergleich der Seriennummern (ISN,SN) durchzuführen und für den Fall, dass die Seriennummern (ISN,SN) identisch sind, den Schreibauftrag (9) durchzuführen.

5. Industriesteuerung (100) nach einem der Ansprüche 1 bis 4, wobei das Betriebssystem (2) ausgestaltet ist Diagnosedaten (DD) zusammenzustellen und zur Abfrage an der Gegenschnittstelle (GSDA) bereitzustellen.

6. Industriesteuerung (100) nach einem der Ansprüche 1 bis 5, wobei das Betriebssystem (2) ausgestaltet ist Konfigurationsdaten (CD) von weiteren über einen Rückwandbus an der Industriesteuerung (100) angeschlossenen Baugruppen zusammenzustellen und zur Abfrage an der Gegenschnittstelle (GSDA) bereitzustellen.

7. Industriesteuerung (100) nach einem der Ansprüche 1 bis 6, wobei das Betriebssystem (2) ausgestaltet ist in der Konfigurations-Datei (HWC) nach einer Beobachtungsliste (BL) von Variablen (V1,...,V10) zu suchen, die Variablen (V1,...,V10) der Beobachtungsliste (BL) mit den aktuellen Werten des Prozessabbildes (6) zu füllen, und zur Abfrage an der Gegenschnittstelle (GSDA) bereitzustellen.

8. Industriesteuerung (100) nach einem der Ansprüche 1 bis 7, wobei das Betriebssystem (2) ausgestaltet ist in der Konfigurations-Datei (HWC) nach einer Steuerungsliste (SL) von Variablen zu suchen, die Variablen (V1,...,V10) der Steuerungsliste (SL) mit den aktuellen Werten des Prozessabbildes zu füllen, und zur Abfrage an der Gegenschnittstelle (GSDA) bereitzustellen, weiterhin ausgestaltet an der Gegenschnittstelle (GSDA) die Steuerungsliste (SL) mit veränderten Werten entgegenzunehmen und in das aktuelle Prozessabbild (6) zu schreiben.

9. Industriesteuerung (100) nach einem der Ansprüche 1 bis 8, wobei das Betriebssystem (2) ausgestaltet ist bei einem erstmaligen einschalten der Industriesteuerung (100) das NFC-Bauteil (D5) zu konfigurieren, dazu ist das Betriebssystem (2) ausgestaltet einen EEPROM-Speicher des NFC-Bauteils (D5) zu löschen, eine CC-Datei (cc) anzulegen, den EEPROM-Speicher ab Ende der CC-Datei (cc) NDEF-konform zu formatieren.

10. Industriesteuerung (100) nach einem der Ansprüche 1 bis 9, wobei die Leiterschleife (LS) auf der zweiten Leiterplatte (LP2) eine Länge (l) von ca. 53,5 mm, eine Breite (b)von ca. 35,7 mm und eine Windungsanzahl von sechs aufweist, zusätzlich sind die Windungen ca. 0,23 mm voneinander beanstandet und weisen eine Breite von ca. 0,23 mm auf, eine Dicke der Windung beträgt 35µm.

11. Industriesteuerung (100) nach einem der Ansprüche 1 bis 10, wobei zwischen dem ersten Endpunkt (P1) und dem zweiten Endpunkt (P2) schaltungstechnisch ein ESD-Entstör-Bauteil (V1) angeordnet ist.

12. Industriesteuerung (100) nach einem der Ansprüche 1 bis 11, wobei die Recheneinheit (1) als ein anwendungsspezifischer integrierter Schaltkreis (ASIC) mit Prozessoren, Schnittstellen, Speicher, Speichermanagement, Ablaufumgebung für das Betriebssystem und Profinet-Schnittstellen ausgestaltet ist.
